Europäisches Patentamt

European Patent Office

Office européen des brevets

(19)

(11) **EP 0 485 008 B1**

(12) **EUROPEAN PATENT SPECIFICATION**

(45) Date of publication and mention
of the grant of the patent:
**17.09.1997 Bulletin 1997/38**

(51) Int Cl.6: **C08G 18/10**, C08G 18/00,
C08G 18/58, C08G 18/16,
C09J 175/04, C09K 3/10

(21) Application number: **91202793.5**

(22) Date of filing: **29.10.1991**

(54) **Crosslinkable hot-melt composition**

Vernetzbare in der Wärme schmelzende Zusammensetzung

Composition thermofusible réticulable

(84) Designated Contracting States:
**AT BE CH DE ES FR GB GR LI LU NL SE**

(30) Priority: **07.11.1990 IT 2198990**

(43) Date of publication of application:
**13.05.1992 Bulletin 1992/20**

(73) Proprietor: **HENKEL S.p.A.**
**Località Ponte della Pietra (IT)**

(72) Inventors:
• **Valeretto, Francesco**
**I-21100 Varese (IT)**
• **Pozzi, Enrico**
**I-20161 Milan (IT)**
• **Parpani, Patrizia**
**I-20135 Milan (IT)**
• **Giordano, Sergio**
**I-20068 Peschiera Borromeo (Milan) (IT)**

(74) Representative: **Modiano, Guido, Dr.-Ing.**
**Modiano & Associati S.r.l.**
**Via Meravigli, 16**
**20123 Milano (IT)**

(56) References cited:
**EP-A- 0 380 178**     **WO-A-89/01503**
**GB-A- 1 324 654**     **US-A- 4 855 383**

• **Saunders, Organic Polymer Chemistry, 2nd Edition, pages 414-417**

**Description**

The invention relates to a reactive hot-melt composition, based on:

(a) at least one prepolymer with isocyanate functional groups;
(b) at least one polyepoxide;
(c) at least one catalyst which catalyses the trimerization of the isocyanates and the polymerization of the epoxides; and, optionally,
(d) additives and/or modifiers.

The above said composition is destined, in particular, to the sector of the high-performance adhesives and sealants. It displays the high values of green strength which are typical of the hot-melt compositions and within very short times, it, thanks to the reaction of formation of isocyanurates and of polymerization of epoxides, shows high values of mechanical strength and heat resistance, even when parts are assembled, which are impermeable to water vapour, such as plastics materials, metals, glass and ceramics.

The same composition can be used as well in the sector of coatings, impregnating agents and laminates.

Reactive hot-melt compositions of thermosetting type (also suitable for application onto substrates impermeable to water vapour) are well known in the sector of adhesives and sealants. The crosslinking process is generally obtained by means of a high-temperature post-curing of the assembled articles.

This involves the need for the parts to be assembled to be kept fastened to each other by means of mechanical fastening means, to be applied immediately after the application of the hot-melt adhesive (with the production rate being consequently reduced), with relevant limitations in short time assembly lines.

Compositions of thermosetting, post-curing hot-melt adhesives on the basis of epoxy prepolymers are disclosed in "Strukturelles Kleben und Dichten im Fahrzeugbau, Fertigungstechnische Aufgaben und Loesungen in Gegenwart und Zukunft", Hinterwaldner Verlag, 1988 Munich, pages 109-116.

Such systems require, after being applied at 80°C, a 30-minute passage through an oven at 180°C, or a thermal activation by an induction mechanism.

Furthermore, from WO patent 89/01503, a multicomponent hot-melt adhesive composition is known in which the components chemically react according to mechanism of poly-addition, or by a free-radical route. In such a composition, the components have to be mixed with one another immediately before the application. Their successive fast crosslinking takes place without any energy supply, by reaction at room temperature, independently from environmental humidity conditions.

Furthermore, from DE patent 38 40 220, a two-component hot-melt adhesive composition is known, in which -NCO-terminated or alkoxysilane prepolymers are mixed before the application with substances which release water.

Thermosetting hot-melt adhesive compositions, post-crosslinkable by a catalytic route are disclosed in FR patent 2 541 298, which teaches the use of an ethylenically-unsaturated thermoplastic prepolymer containing urethane groups (derived from the reaction between an acrylate ester of an epoxy resin, containing at least one hydroxy group, and an isocyanate-blocked diol), and a thermal radical initiator.

Such compositions may require melting temperatures of from 80° to 120°C., and successive post-crosslinking processes of from 10 to 30 minutes as at least 140-160°C., or by electromagnetic way.

Furthermore, the EP Patent Application 380178 of the Applicant discloses a reactive hot-melt composition based on prepolymers with isocyanate functionalisation and trimerization catalysts.

During the application step, the reaction of trimerization is activated by means of the feed of a certain energy amount, and said reaction proceeds also at room temperature, in the absence of moisture.

Such a composition makes it possible high values of mechanical strength and heat resistance to be obtained within short times, and in order that such a performance may be achieved, it requires the use of prepolymers with a high concentration of NCO groups to be used, a feature which may in some way be critical during the application step.

Known from GB-A-1 324 654 is a moisture-free molding mixture in particulate form of isocyanate-terminated substantially linear urethane prepolymer, said prepolymer having a softening point of from 50 to 180 C, and at least one of a catalyst for the cyclic trimerization of isocyanates to isocyanurates and an organic compound containing one or more functional groups which separately or in combination are capable of reacting with at least two isocyanate groups.

From US-A-4 855 383 is known a curable composition suitable for use as an adhesive which comprises a liquid composition comprising an isocyanate-functional compound, an epoxy component, and an alkylating agent, and a tertiary amine catalyst precursor.

The present applicant has found now, and this is the subject-matter of the present invention, a cross-linkable hot-melt composition comprising:

(a) at least one prepolymer with isocyanate functionalisation, formed by means of the reaction between a compound containing active hydrogenes and a polyisocyanate, such a prepolymer being characterized by a ratio of -NCO groups to the active hydrogen containing group, which is lower than, or equal to 5, and by a softening point comprised within the range of from +30 to +200°C.;

(b) at least one poly-epoxide, contained in a ratio of from approximately 0.01 up to approximately 100 equivalents of poly-epoxide per each equivalent of prepolymer with isocyanate functionalisation;

(c) at least one catalyst which catalyses the trimerization of isocyanates and the homo-polimerization of epoxides, and, possibly,

(d) non-reactive additives and/or modifiers, provided that no alkylation catalyst is present, in which the active-hydrogen-containing compounds indicated under (a) are selected from those having molecular weights within the range of from 400 to 10000.

An advantage shown by the present invention, as compared to the above mentioned Patent application, is the use of prepolymers with a low level of NCO group, which display characteristics of higher safety during the application step. Furthermore, the co-use of epoxy resins brings further advantages, as regards the development of high values of mechanical strength and heat resistence within short times.

The above is true both in the field of adhesives and sealants, and of coatings, impregnating agents and laminates. Both reactions, i.e., the reaction of isocyanate trimerization and the reaction of epoxide polymerization, proceed by a catalytic mechanism even at room temperature, and in the absence of moisture.

These basic properties correspond to the industrial requirements, which demand fast or automated application cycles.

The reactive system which is the subject-matter of the present invention, can be formulated as a single-component product, or as a multi-component product.

A single-component product can be obtained by using latent catalysts as regards the NCO function and the epoxy function, and optionally having resort to prepolymers with blocked isocyanate functionalisation.

A single-component product can also be obtained by using all the ingredients of the composition in powder form.

In the case of a two-component or multi-component product, the components thereof will be mixed with one another immediately before the application.

In some particular application situations, in the sector of the adhesives, an application process by contact can be provided, in which the components are separately applied to the parts to be assembled together.

A further advantage of the reactive system according to the present invention is the possibility of obtaining, under high-temperature conditions, by means of post-crosslinking processes at temperatures comprised within the approximate range of from 100 to 200°C, the interpolymerization between the isocyanate groups and the epoxy groups, with the consequent formation of oxazolidones.

In greater detail, the reactive system is constituted as follows:

(a) the prepolymers containing isocyanate groups are the products from the reaction between polyisocyanates and compounds which contain active hydrogen atoms, and bear either free or blocked isocyanate groups. Each type of monomeric, oligomeric or polymeric, organic polyisocyanate, can be used, either as individual compounds, or as mixtures. Representative examples of polyisocyanates are the difunctional aromatic types on the basis of toluylene-diisocyanate (TDI), diphenylmethane-diisocyanate (MDI), naphthylene-diisocyanate, phenylene-diisocyanate, and the like; the difunctional, aliphatic and cycloaliphatic types on the basis of hexamethylene-diisocyanate (HDI), isophorone-diisocyanate (IPDI), tetramethylxylylene-diisocyanate, cyclohexyl-diisocyanate, dicyclohexylmethane-diisocyanate (H12 MDI); the difunctional and polyfunctional types modified with urethane, carbodiimide, urethidinedione, urethone-imine, isocyanurate, urea and biuret, and derivatives from the above polyisocyanates; the polymeric types, such as polymethylene-polyphenylmethane-polyisocyanate, or the partially polymeric types, such as technical-grade diisocyanates.

The preferred types are the difunctional types with an aromatic basis (in particular MDI) or an aliphatic basis (in particular IPDI, HDI, H12 MDI). By "compounds containing active hydrogen atoms", all type of polyols, chain extenders, reaction promoters or reaction blockers, and of any other active compounds according to Zerewitinoff test, are understood.

Polyols suitable for the intended use are, for example, those on a polyether, polyester, polylactone, polycarbonate, polybutilene, polybutadiene, polyisoprene basis, and mixtures thereof.

The molecular weights can be comprised within the range of from 400 to 10,000, and the glass transition temperature (Tg) values can be comprised within the range of from -80 to +50°C.

In general, the diols with a molecular weight comprised within the range of from 400 to 5,000 are preferred, and within a certain composition, the combinations of diols of crystalline, amorphous (elastomeric) and glassy types are preferred.

Furthermore, polyols with a functionality higher than 2 can be used. The trifunctional polyols of isocyanuric type, such as trihydroxyethylisocianurate, or those deriving from trimethylolpropane, are preferred.

As chain extenders, short-chain polyols can be introduced, such as, e.g., 1,4-butanediol or 1,6-hexanediol or aliphatic diamines, such as, e.g., hexamethylenediamine, isophoronediamine, or polyoxyalkyleneamines.

Other types of active compounds according to Zerewitinoff, which can be added, are constituted, e.g., by polyaminoamides.

As regards the functionalisation conditions, the ratio of -NCO groups to active hydrogen containing groups should be lower than, or equal to, 5. The content of -NCO groups in the prepolymer is usually of at least 0.5%, and is preferably comprised within the range of from 1.5 to 6% by weight.

The prepolymers obtained can be furthermore modified by introducing oxazolidonic segments by reacting the end -NCO groups with epoxy derivatives.

The softening point of the prepolymers or of the prepolymer mixtures to be taken into account, may be comprised within the range of from +30 to +200°C; values comprised within the range of from +40 to +100°C are preferred.

Suitable blocking agents for -NCO groups are those listed in "Progress in Organic Coatings" 3 (1975) 73-99, and those taught in U.S. patent 4 524 104.

Also suitable may be the following: substituted pyrazoles, as taught by EP patent 159 117; the aromatic triazoles cited in Elastomers and Plastics volume 11 January 1979; 6-methylpiperidine-2-one, as set forth in DE patent 3 312 028; hydroxamic esters, such as benzylmethacrylhydroxamate cited in J. Coating Technology, 50, 58, 1978, and polymeric blockers, such as, e.g., the terpene-phenolic resins, as taught in EP patent 294 271.

Among the blocking agents, those having a melting point higher than 65°C are preferred.

The reaction between the blocking agents and -NCO groups takes place usually, with a ratio, as equivalents, of the blocking group to -NCO group comprised within the range of from 1:1 to 2:1, and, preferably, of from 1.05:1 to 1.1:1.

Also suitable for the intended use are the internally blocked polyisocyanates, such as those which contain urethidinedione groups.

(b) The polyepoxides envisaged for use include any types of aliphatic, cycloaliphatic, aromatic, heterocyclic compounds containing at least 2 epoxy groups, and have equivalent weights comprised within the range of from 100 to 5000, and preferably of from 170 to 240.

Reference is made herein to the typologies set forth in U.S. patents 4 728 676 and 4 766 158.

The diglycidyl ether of bisphenol A (DGEBA) and the polyglycidyl ethers of novolaks, which do not contain hydroxy groups reactive with the NCO-terminated prepolymers, and in particular, the semi-solid and solid epoxy novolaks are preferred.

Furthermore, the polyepoxides modified in order that their characteristics of flexibility are increased, such as, e.g., those which contain in their chain polyurethane, polysulfuric or polyunsaturated segments, can be used. In particular, those types which do not contain reactive hydroxy groups, are preferred.

The ratios, of the equivalents of polyepoxides to the equivalents of prepolymers with isocyanic functionalisation may be comprised within the range of from about 0.01 up to about 100 equivalents of polyepoxide per each equivalent of prepolymer containing isocyanate groups, and preferably of from 0.1 up to 25.

(c) The invention envisages the use of at least one catalyst of trimerization of isocyanates and the use of at least one catalyst of polymerization of epoxides. Such compounds may be selected from among the following chemical classes:

- Either linear or cyclic, tertiary amines or amidines or guanidines, and their salts with proton donors or Lewis acids.
- Adducts between tertiary amines and alkylene oxides, and their salts with proton donors.
- Quaternary salts of ammonium or phosphonium or boronium or sulfonium.
- Metal carboxylates or xanthates.
- Organic antimony halides.
- Substituted imidazoles or indoles.
- Inorganic bases or alkoxides.
- Phosphines.
- Lewis acids.
- Aziridine derivatives.

The use is preferred of catalysts which are simultaneously active in both said reaction types.

In order to allow both reactions to be initiated, it is necessary that the incorporation level is higher than, or equal to 0.05% by weight, relatively to the prepolymer amount, and preferably is comprised within the range of from 0.5% up to about 10%.

The reactive system according to the present invention, when is formulated as a single-component product, requires the use of prepolymers with blocked NCO functionalisation, and/or the use of latent catalysts, which may be activated at temperatures preferably higher than 90°C, in order to obtain commercially meaningful values of storage stability.

The latency effect is preferably obtained by means of the use of:

(a) micronized, crystalline, solid catalysts with a melting point preferably higher than 90°C;
(b) microencapsulated liquid or solid catalysts.

Among the crystalline, solid catalysts, cycloamidines, cycloguanidines and their salts with proton donor compounds or Lewis acids are preferred.

If microencapsulated catalysts are used, the process of microencapsulation by surficial cross-linking of isocyanates, acrylates, epoxides or aziridines, carried out according to the methodologies known from the prior art, is preferred.

(d) Any other types of additives or modifiers may be incorporated into the hot-melt composition in order that further specific performance properties are obtained: the adhesion promoters (e.g., functionalized trialkoxysilanes, or titanates), co-catalysts (e.g., aldehydes, alkylene carbonates, organometallic compounds, carbodiimides, oxazolidines), viscosity depressants, inorganic fillers, energy absorbing fillers (for example, conductive fillers or ferromagnetic fillers or polar fillers), antioxidants, stabilizers, flame-retardants, non-reactive resins (for example, "tackifiers").

The total amount of these optional additives may be comprised within the range of from 0 to 95% by weight, as referred to the hot-melt composition.

The composition is manufactured by mixing the components (a), (b), (c) and, optionally, (d), as characterized hereinabove, with one another, by means of production processes well known to those skilled in the art.

The composition according to the present invention is used in all known sectors, which have been briefly mentioned above, and in which hot-melt compositions are used.

Such a composition is particularly advantageous, because it can be applied under less critical conditions than as known and, above all, because the crosslinking reactions take place within short times, independently from the environmental conditions, and furthermore they can be started by supplying a certain energy amount, which may be supplied even before the application time.

Said energy supply can be carried out by means of a "thermal shock", accomplished:

1) by electrical way;
2) by heat exchange;
3) by electromagnetic (inductive) way;
4) by dielectric way;
5) by means of microwaves,

or by other routes.

Said energy supply can take place over a time period which may range from 0.1 seconds up to 10 minutes.

An energy supply at a later time than the application, according to the present state of the art, can anyway be carried out as well.

If microencapsulated catalysts are used, the activation of the polymerization reactions may take place, besides by thermal way, also by means of another route, capable of causing the catalyst to be released owing to the breackage of the microcapsule, e.g., by a mechanical action performed by stirring, friction or pressure, also at a later time than the application step.

If the product is formulated as a double-component or multi-component, package, it is advisable to provide for the mixing system to be cleaned with the component which contains the polymeric vehicles, or with a non-reactive liquid.

The mixing process can be easily performed in the case of the present invention, because the polymerization reactions are started by a catalytic way, and the system may tolerate, within broad limits, situations of imperfect metering and mixing.

The reactive, double-component composition can be also used in the sector of the adhesives, according to the contact process, wherein the components are separately applied to the parts to be assembled with each other. This application process is suitable when perfectly specular parts have to be bonded to each other, and, in practice, for well-controlled, small, surface-area and thickness values.

It is clear that this process, whenever possible, offers the great advantage that it makes it possible the open time of the hot-melt composition to be controlled independently of polymerization reaction rate.

The invention is further illustrated, but not limitated, by the following experimental examples.

Example 1

"A" Component: 79.7 g of polyester-diol (from 1,6-hexanediol adipate, OH No. = 29, Dynacoll 7360 Hüls) is charged to the reactor and deaerated under vacuum at 80°C, for at least 2 hours. Subsequently, 10.3 g of 4,4'-diphenylmethanediisocyanate (Desmodur 44 MS) is added with stirring and under a flowing nitrogen stream, and the reaction is continued until the theoretical value of NCO percentage is reached (approximately 3 reaction hours is needed).

The temperature is increased up to 110°C and, under a flowing nitrogen stream, 10 g of epoxy-phenolic resin is added (equivalent weight: 187, softening point: 78°C, Quatrex 2410 DOW), previously melted at 100°C.

The reaction mixture is stirred for 15 minutes and then is discharged.

"B" Component: 50 g of tris-2,4,6-dimethylaminomethyl phenol (K 54, Anchor) is charged to a vessel, into which 50 g of China clay (ICECAP K, Burgess) is subsequently dispersed by using a Cowles impeller.

Ratio of A/B = 100/4

Comparative Example 2

97.7 g of polyester-diol (from 1,6-hexanediol adipate, OH No. = 29, Dynacoll 7360 Hüls) is charged to the reactor and deaerated under vacuum at 80°C, for at least 2 hours. Subsequently, 10.3 g of 4,4'-diphenylmethanediisocyanate (Desmodur 44 MS) is added with stirring and under a flowing nitrogen stream, and the reaction is continued until the theoretical value of NCO percentage is reached (approximately 3 reaction hours is needed).

The temperature is decreased down to 50°C, and then 0.45 g of dibutyltin dilaurate, DBTL, is added, with stirring and under a flowing nitrogen stream. After a 15-minute stirring, the product is discharged.

Comparative Example 3

"A" Component: 79.7 g of polyester-diol (from 1,6-hexanediol adipate, OH No. = 29, Dynacoll 7360 Hüls) is charged to the reactor and deaerated under vacuum at 80°C, for at least 2 hours. Subsequently, 10.3 g of 4,4'-diphenylmethanediisocyanate (Desmodur 44 MS) is added with stirring and under a flowing nitrogen stream, and the reaction is continued until the theoretical value of NCO percentage is reached (approximately 3 reaction hours is needed). After a 15-minute stirring, the product is discharged.

"B" Component : tris-2,4,6-dimethylaminomethylphenol (K 54, Anchor).

Ratio of A/B = 100/1

The results of the characterization are as follows:

| Hot-Melt Composition | Example 1 ("A" Component) | Comparative Example 2 | Comparative Example 3 ("A" Component) |
|---|---|---|---|
| **Characteristics of the Products as such** | | | |
| - Melting temperature (Tm) ($^\circ$C) (1) | 60.5 | 61.8 | 61.8 |
| - Viscosity at 100$^\circ$C (mPa.s) (2) | | | |
| after 2 hours at 100°C | 150,000 | 25,000 | 25,000 |
| after 6 hours at 100°C | 200,000 | 32,000 | 32,000 |
| - Storage Stability at 23$^\circ$C | | | |
| NCO content, theoretical % value | 1.73 | 1.92 | 1.92 |
| % content after 40 days | 1.45 | 1.75 | 1.75 |

EP 0 485 008 B1

Application method:

The "A" components of products 1 and 3, and product 2 are rapidly heated, in an anhydrous environment, up to 100°C. Then after mixing together the components "A" and "B" by either manual or mechanical way, the products 1, 2 and 3 are applied to the test specimens, which are immediately assembled and afterwards tested.

Characteristics of the Assembled Articles:

| Example | Application Conditions (3) | | | Shear Resistance (4) | | |
| | Application Temperature (°C) | Harden-ing Time at 23°C (min) | Thermal Shock at 80°C (min) | Load (daN/cm$^2$) | Test Temp. (°C) | Adhesive layer consistency |
|---|---|---|---|---|---|---|
| 1 | 80 | 10 | – | 80 | 23 | solidified |
| | 80 | 10 | 2 | 1 | 80 | gelled |
| | 80 | 30 | – | 120 | 23 | solidified |
| | 80 | 30 | 2 | 2 | 80 | gelled |
| | 80 | 60 | – | 140 | 23 | hardened |
| | 80 | 60 | 2 | 4 | 80 | rubbery |
| | 80 | 7 days | – | 120 | 23 | hardened |
| | 80 | 7 days | 60 | 20 | 80 | hardened |
| 2 | 80 | 60 | – | 50 | 23 | solidified |
| | 80 | 60 | 2 | – | 80 | remelting |
| | 80 | 7 days | – | 46 | 23 | solidified |
| | 80 | 7 days | 60 | 4 | 80 | remelting |
| 3 | 80 | 10 | – | 80 | 23 | solidified |
| | 80 | 10 | 2 | – | 80 | remelting |
| | 80 | 30 | – | 90 | 23 | solidified |
| | 80 | 30 | 2 | – | 80 | remelting |
| | 80 | 60 | – | 125 | 23 | solidified |
| | 80 | 60 | 2 | – | 80 | remelting |
| | 80 | 7 days | – | 90 | 23 | hardened |
| | 80 | 7 days | 60 | 9 | 80 | hardened |

EP 0 485 008 B1

| Example | Application Conditions | | | Resistance to High Temperature Creep (5) | | |
|---|---|---|---|---|---|---|
| | Application Method | Application Temperature (°C) | Curing Time (hours) | Temperature (°C) | Load (daN/cm²) | Time to Failure |
| 1 | Static Mixer | 100 | 1 | 80 | 1 | 60 seconds |
| | | 100 | 4 | 80 | 2.6 | 60 seconds |
| | | 100 | 72 | 80 | 4 | >15 minutes |
| | | 100 | 72 | 100 | 4 | >15 minutes |
| | | 100 | 72 | 120 | 4 | >15 minutes |
| | | 100 | 7 days | 120 | 4 | 30 minutes |
| 2 | Manual | 100 | 4 | 80 | 0.15 | 45 seconds |
| | | 100 | 7 days | 80 | 0.15 | > 2 minutes |
| | | 100 | 7 days | 80 | 0.7 | > 2 minutes |
| | | 100 | 7 days | 80 | 1.3 | > 2 minutes |
| | | 100 | 7 days | 80 | 2.6 | 60 seconds |
| 3 | Manual | 100 | 4 | 80 | 0.15 | 110 seconds |
| | | 100 | 7 days | 80 | 0.7 | > 2 minutes |
| | | 100 | 7 days | 80 | 1.3 | > 2 minutes |
| | | 100 | 7 days | 80 | 2.6 | > 2 minutes |
| | | 100 | 7 days | 80 | 3.3 | 10 minutes |

Remarks:

(1) DSC (METTLER DSC 30)
(2) Rotational viscometer Viscotester, impeller E 1000

10

(3) Manual mixing
(4) ASTM 1002; UNI 5866 steel (size 60x25x1 mm)
    Surface treatment = sandpapering with abrasive paper 240

* Adhesive thickness = 500-800 my
* Coupled surface-area = 25x25 mm
* Number of specimens = four specimens/test
* Environmental conditions = 23 ± 2°C, relative humidity (R.H.) 60-70%
* Assembling of specimens = within 30 seconds after the application of the adhesive
* Separation speed = 10 mm/minute.

(5) Specimens made from UNI 5866 steel (size 60x25x1 mm)
    Surface treatment = sandpapering with abrasive paper 240

* Coupled surface-area = 25x25 mm
* Thickness = 500-800 my
* Number of specimens = four specimens/test
* Environmental conditions = 23 ± 2°C, relative humidity (R.H.) 60-70%
* Assembling of specimens = within 30 seconds after the application of the adhesive

The specimens are charged to an oven, under a tensile stress with a constant load, and are conditioned at different temperatures.

## Claims

1. A cross-linkable hotmelt composition comprising:

   (a) at least one prepolymer with isocyanate functionalisation, formed by means of the reaction between a compound containing active hydrogens and a polyisocyanate, such a prepolymer being characterized by a ratio of -NCO groups to the active hydrogen containing groups, which is lower than, or equal to 5, and by a softening point comprised within the range of from +30 to +200'C;
   (b) at least one polyepoxide, contained in a ratio of from 0.01 up to 100 equivalents of polyepoxide per each equivalent of prepolymer with isocyanate functionalisation;
   (c) at least one catalyst which catalyses the trimerization of isocyanates and the homo-polymerization of epoxides; and, possibly,
   (d) additives and/or modifiers, provided that no alkylation catalyst is present, in which the active-hydrogen-containing compounds indicated under (a) are selected from those having molecular weights within the range of from 400 to 10000.

2. Crosslinkable hot-melt composition according to the preceding claim, in which the active-hydrogen-containing compound indicated under (a) is selected from polycarbonate-polyols, polyester-polyols, polycaprolactone-polyols, polyether-polyols, polybutylene-polyols, polyisoprene-polyols, polybutadiene-polyols, polybutadiene-acrylonitrile-polyols, polystyrene-butadiene-polyols, polyacrylate-polyols, as single compounds, or as mixtures with one another.

3. Crosslinkable hot-melt composition according to the preceding claim, in which the active-hydrogen-containing compounds are selected from those having molecular weights within the range of from 400 to 10,000.

4. Crosslinkable hot-melt composition according to claim 2, in which the active-hydrogen-containing compound is preferably made up of a mixture of two or more of said polyols.

5. Crosslinkable hot-melt composition according to claim 2, in which the active-hydrogen-containing compound is made up of a mixture of two or more polyols in different physical forms.

6. Crosslinkable hot-melt composition according to claim 2, in which the active-hydrogen-containing compound is modified with polyols having a molecular weight lower than 400.

7. Crosslinkable hot-melt composition according to claim 2, in which the active-hydrogen-containing compound is modified with diamines having a molecular weight lower than 2,000.

8. Crosslinkable hot-melt composition according to claim 2, in which the active-hydrogen-containing compound is modified with polyaminoamides.

9. Crosslinkable hot-melt composition according to claim 1, in which the polyisocyanate specified under (a) is selected from among monomeric, oligomeric or polymeric, difunctional compounds on an aromatic, aliphatic or cycloaliphatic basis, or from the oligomeric compounds on a aromatic, aliphatic or cycloaliphatic basis modified with groups selected from urethanes, isocyanurates, ureas, biurets, urethidinediones, urethone-imines or carbodiimides.

10. Crosslinkable hot-melt composition according to the preceding claim, in which the diisocyanate is modified with a triisocyanate.

11. Crosslinkable hot-melt composition according to claim 9, in which the polyisocyanate is preferably selected from diphenylmethanediisocyanate, isophorone-diisocyanate, hexamethylene-diisocyanate, dicyclohexylmethane-diisocyanate

12. Crosslinkable hot-melt composition according to claim 1, in which the prepolymer with isocyanate functionalisation is characterized by a content of -NCO groups of at least 0.5% by weight.

13. Crosslinkable hot-melt composition according to claim 1, in which the prepolymer with isocyanate functionalisation is partially modified by means of the introduction of oxazolidone segments.

14. Crosslinkable hot-melt composition according to claim 1, in which the prepolymer with isocyanate functionalisation is partially modified by means of the introduction of polyols with a functionality higher than 2.

15. Crosslinkable hot-melt composition according to claim 1, in which the prepolymer with isocyanate functionalisation is characterized by the presence of blocked -NCO groups.

16. Crosslinkable hot-melt composition according to claim 15, in which the prepolymer with isocyanate functionalisation is characterized by the presence of -NCO groups preferably blocked with blocking agents having a melting point higher than 65°C.

17. Crosslinkable hot-melt composition according to claim 15, in which the prepolymer with isocyanate functionalisation is characterized by the presence of internally blocked -NCO groups.

18. Crosslinkable hot-melt composition according to claim 15, in which the prepolymer with isocyanate functionalisation is characterized by the presence of internally blocked -NCO groups containing urethidinedione.

19. Crosslinkable hot-melt composition according to claims from 1 to 18, in which the polyepoxide is made up of one or more types of aliphatic, cycloaliphatic, aromatic or heterocyclic compounds containing at least two epoxide groups and having an equivalent weight of from 100 to 5,000.

20. Crosslinkable hot-melt composition according to the preceding claim, in which the ratio of the equivalents of epoxide groups to the equivalents of isocyanate groups is within the range of from 0.1 up to 25 equivalents of polyepoxide per each equivalent of prepolymer.

21. Crosslinkable hot-melt composition according to claim 19, in which the polyepoxide is the polyglycidyl ether of a novolak resin.

22. Crosslinkable hot-melt composition according to claim 19, in which the polyepoxide is the diglycidyl ether of bisphenol A (DGEBA).

23. Crosslinkable hot-melt composition according to claim 19, in which the polyepoxide contains elastomeric segments and does not contain OH groups.

24. Crosslinkable hot-melt composition according to claim 23, in which the polyepoxide is the product from the reaction between an NCO-terminated prepolymer and an epoxy resin, and such polyepoxide does not contain OH groups.

25. Crosslinkable hot-melt composition according to claim 23, in which the polyepoxide is the reaction product of a diisocyanate, a hydroxy-containing elastomer and an epoxy resin, and such a polyepoxide does not contain OH groups.

26. Crosslinkable hot-melt composition according to claim 23, in which the polyepoxide contains polysulfide segments and does not contain OH groups.

27. Crosslinkable hot-melt composition according to claims from 19 to 20, in which the polyepoxide contains OH groups.

28. Crosslinkable hot-melt composition according to claims from 20 to 21, in which the polyepoxide contains elastomeric segments.

29. Crosslinkable hot-melt composition according to claims from 1 to 28, in which the isocyanate trimerization and epoxide polymerization catalyst is made up of at least one of the following compounds:

- either linear or cyclic tertiary amines or amidines or guanidines, and their salts with proton donor compounds or Lewis acids;
- adducts of tertiary amines and alkylene-oxides and their salts with proton donors;
- quaternary ammonium or phosphonium or boronium or sulfonium salts;
- metal carboxylates or xanthates
- organic antimony halides
- substituted imidazoles or indoles;
- inorganic bases or alkoxides
- phosphines
- Lewis acids;
- aziridine derivatives.

30. Crosslinkable hot-melt composition according to claim 29, in which to the catalyst one or more co-catalysts are added, which are selected from the following compounds:

- alkylene carbonates
- aldehydes
- oxazolines
- carbodiimides
- organometallic compounds.

31. Crosslinkable hot-melt composition according to claim 29, in which the catalyst amount is of at least 0.05% by weight.

32. Crosslinkable hot-melt composition according to claim 31, in which the catalyst amount is within the range of from 0,5% up to 10% by weight.

33. Crosslinkable hot-melt composition according to claim 29, in which the catalyst is of crystalline solid type.

34. Crosslinkable hot-melt composition according to claim 29, in which the catalyst is of either liquid or solid type, and is added to the reaction mixture in a microencapsulated form.

35. Process for bonding substrates comprising the step of applying to a substrate to be bonded a cross-linkable hot-melt composition according to claim 1.

36. Process according to claim 35, characterized in that components of said crosslinkable hot-melt composition are blended by means of either a static or a dynamic mixer, before the application.

37. Process according to claim 35, characterized in that components of said crosslinkable hot-melt composition are separately applied to the substrates to be bonded and brought into contact just when assembling said substrates.

**38.** Process according to claim 35 characterized in that it further comprises the step of post-crosslinking at temperatures of from 100 to 200°C., thereby obtaining oxazolidone linkages.

**39.** Process according to claim 35, characterized in that energy is supplied to said composition before the application to the substrate to be bonded.

**40.** Use of a composition according to claim 1 as a hot-melt adhesive or sealant.

**Patentansprüche**

**1.** Eine vernetzbare Heißschmelz-Zusammensetzung mit:

(a) wenigstens einem Präpolymer mit Isocyanat-Funktionalität, das gebildet ist durch eine Reaktion zwischen einer Verbindung, die aktive Wasserstoffe enthält, und einem Polyisocyanat, wobei ein derartiges Präpolymer charakterisiert ist durch ein Verhältnis von -NCO-Gruppen zu aktiven Wasserstoff enthaltenden Gruppen von weniger als oder gleich 5 sowie durch einen Erweichungspunkt, der im Bereich von +30 bis +200°C liegt;

(b) wenigstens einem Polyepoxid, enthalten in einem Verhältnis von 0,01 bis zu 100 Äquivalenten Polyepoxid pro jedes Äquivalent des Präpolymeren mit Isocyanat-Funktionalität;

(c) wenigstens einem Katalysator, der die Trimerisierung von Isocyanaten und die Homopolymerisation von Epoxiden katalysiert; und, möglicherweise,

(d) Zusätzen und/oder Modifikatoren, mit der Maßgabe, daß kein Alkylierungskatalysator vorhanden ist, wobei die aktiven Wasserstoff enthaltenden Verbindungen, die unter (a) angegeben werden, aus solchen ausgewählt sind, die Molekulargewichte im Bereich von 400 bis 10.000 aufweisen.

**2.** Vernetzbare Heißschmelz-Zusammensetzung nach dem vorausgehenden Anspruch, bei der die aktiven Wasserstoff enthaltende Verbindung, die unter (a) angegeben ist, ausgewählt ist aus Polycarbonatpolyolen, Polyesterpolyolen, Polycaprolactonpolyolen, Polyetherpolyolen, Polybutylenpolyolen, Polyisoprenpolyolen, Polybutadienpolyolen, Polybutadien-Acrylnitril-Polyolen, Polystyrol-Butadien-Polyolen, Polyacrylatpolyolen in Form einzelner Verbindungen oder ihrer gegenseitigen Mischungen.

**3.** Vernetzbare Heißschmelz-Zusammensetzung nach dem vorausgehenden Anspruch, bei der die aktiven Wasserstoff enthaltenden Verbindungen aus solchen ausgewählt sind, die Molekulargewichte im Bereich von 400 bis 10.000 aufweisen.

**4.** Vernetzbare Heißschmelz-Zusammensetzung nach Anspruch 2, bei der die aktiven Wasserstoff enthaltende Verbindung vorzugsweise aus einer Mischung von zwei oder mehr der genannten Polyole gebildet wird.

**5.** Vernetzbare Heißschmelz-Zusammensetzung nach Anspruch 2, bei der die aktiven Wasserstoff enthaltende Verbindung aus einer Mischung von zwei oder mehr Polyolen in unterschiedlichen physikalischen Formen gebildet wird.

**6.** Vernetzbare Heißschmelz-Zusammensetzung nach Anspruch 2, bei der die aktiven Wasserstoff enthaltende Verbindung mit Polyolen modifiziert ist, die ein Molekulargewicht von weniger als 400 aufweisen.

**7.** Vernetzbare Heißschmelz-Zusammensetzung nach Anspruch 2, bei der die aktiven Wasserstoff enthaltende Verbindung mit Diaminen mit einem Molekulargewicht von weniger als 2.000 modifiziert ist.

**8.** Vernetzbare Heißschmelz-Zusammensetzung nach Anspruch 2, bei der die aktiven Wasserstoff enthaltende Verbindung mit Polyaminoamiden modifiziert ist.

**9.** Vernetzbare Heißschmelz-Zusammensetzung nach Anspruch 1, bei der das unter (a) angegebene Polyisocyanat ausgewählt ist aus monomeren, oligomeren oder polymeren bifunktionalen Verbindungen auf der Basis aromatischer, aliphatischer oder cycloaliphatischer Verbindungen, oder aus oligomeren Verbindungen auf der Basis aromatischer, aliphatischer oder cycloaliphatischer Verbindungen, die modifiziert sind mit Gruppen, die ausgewählt

14

sind aus Urethanen, Isocyanuraten, Harnstoffen, Biuretverbindungen, Urethidindionen, Urethoniminen oder Carbodiimiden.

10. Vernetzbare Heißschmelz-Zusammensetzung nach dem vorausgehenden Anspruch, bei dem das Diisocyanat mit einem Triisocyanat modifiziert ist.

11. Vernetzbare Heißschmelz-Zusammensetzung nach Anspruch 9, bei der das Polyisocyanat vorzugsweise ausgewählt ist aus Diphenylmethandiisocyanat, Isophorondiisocyanat, Hexamethylendiisocyanat, Dicyclohexylmethandiisocyanat.

12. Vernetzbare Heißschmelz-Zusammensetzung nach Anspruch 1, bei der das Präpolymer mit Isocyanat-Funktionalität charakterisiert ist durch einen Gehalt an -NCO-Gruppen von wenigstens 0,5 Gew.-%.

13. Vernetzbare Heißschmelz-Zusammensetzung nach Anspruch 1, bei der das Präpolymer mit Isocyanat-Funktionalität teilweise durch die Einführung von Oxazolidon-Segmenten modifiziert ist.

14. Vernetzbare Heißschmelz-Zusammensetzung nach Anspruch 1, bei der das Präpolymer mit Isocyanat-Funktionalität teilweise modifiziert ist durch Einführung von Polyolen mit einer Funktionalität von mehr als 2.

15. Vernetzbare Heißschmelz-Zusammensetzung nach Anspruch 1, bei der das Präpolymer mit Isocyanat-Funktionalität durch die Gegenwart von blockierten -NCO-Gruppen charakterisiert ist.

16. Vernetzbare Heißschmelz-Zusammensetzung nach Anspruch 15, bei der das Präpolymer mit Isocyanat-Funktionalität charakterisiert ist durch die Anwesenheit von -NCO-Gruppen, die vorzugsweise mit Blockierungsmitteln mit einem Schmelzpunkt von mehr als 65°C blockiert sind.

17. Vernetzbare Heißschmelz-Zusammensetzung nach Anspruch 15, bei der das Präpolymer mit Isocyanat-Funktionalität gekennzeichnet ist durch die Gegenwart von intern blockierten -NCO-Gruppen.

18. Vernetzbare Heißschmelz-Zusammensetzung nach Anspruch 15, bei der das Präpolymer mit Isocyanat-Funktionalität gekennzeichnet ist durch die Gegenwart von intern blockierten -NCO-Gruppen, die Urethidindion enthalten.

19. Vernetzbare Heißschmelz-Zusammensetzung nach den Ansprüchen 1 bis 18, bei der das Polyepoxid gebildet ist aus einem oder mehreren Typ(en) von aliphatischen, cycloaliphatischen, aromatischen oder heterocyclischen Verbindungen, die wenigstens zwei Epoxidgruppen enthalten und ein Äquivalentgewicht von 100 bis 5.000 aufweisen.

20. Vernetzbare Heißschmelz-Zusammensetzung nach dem vorausgehenden Anspruch, bei der das Verhältnis der Äquivalente der Epoxidgruppen zu den Äquivalenten der Isocyanatgruppen im Bereich von 0,1 bis zu 25 Äquivalenten Polyepoxid pro jedes Äquivalent Präpolymer liegt.

21. Vernetzbare Heißschmelz-Zusammensetzung nach Anspruch 19, bei der das Polyepoxid der Polyglycidylether eines Novolakharzes ist.

22. Vernetzbare Heißschmelz-Zusammensetzung nach Anspruch 19, bei der das Polyepoxid der Diglycidylether von Bisphenol A (DGEBA) ist.

23. Vernetzbare Heißschmelz-Zusammensetzung nach Anspruch 19, bei der das Polyepoxid elastomere Segmente enthält und keine OH-Gruppen enthält.

24. Vernetzbare Heißschmelz-Zusammensetzung nach Anspruch 23, bei der das Polyepoxid das Produkt der Reaktion zwischen einem Präpolymer mit terminalen NCO-Gruppen und einem Epoxidharz ist, und wobei ein derartiges Polyepoxid keine OH-Gruppen enthält.

25. Vernetzbare Heißschmelz-Zusammensetzung nach Anspruch 23, bei der das Polyepoxid das Reaktionsprodukt eines Diisocyanats, eines Hydroxylgruppen-haltigen Elastomeren sowie eines Epoxidharzes ist, und ein derartiges Polyepoxid keine OH-Gruppen enthält.

26. Vernetzbare Heißschmelz-Zusammensetzung nach Anspruch 23, bei der das Polyepoxid Polysulfidsegmente enthält und keine OH-Gruppen enthält.

27. Vernetzbare Heißschmelz-Zusammensetzung nach Ansprüchen von 19 bis 20, bei der das Polyepoxid OH-Gruppen enthält.

28. Vernetzbare Heißschmelz-Zusammensetzung nach Ansprüchen von 20 bis 21, bei der das Polyepoxid elastomere Segmente enthält.

29. Vernetzbare Heißschmelz-Zusammensetzung nach Ansprüchen von 1 bis 28, bei der der Katalysator für die Isocyanattrimerisierung und die Epoxid-Polymerisation von wenigstens einer der folgenden Verbindungen gebildet wird:

- entweder linearen oder cyclischen tertiären Aminen oder Amidinen oder Guanidinen sowie deren Salzen mit Protonendonatoren-Verbindungen oder mit Lewis-Säuren;

- Addukten von tertiären Aminen und Alkylenoxiden und deren Salzen mit Protonendonatoren;

- quaternären Ammonium- oder Phosphonium- oder Boronium- oder Sulfonium-Salzen;

- Metallcarboxylaten oder -xanthaten;

- organischen Antimonhalogeniden;

- substituierten Imidazolen oder Indolen;

- anorganischen Basen oder Alkoxiden;

- Phosphinen;

- Lewis-Säuren;

- Aziridinderivaten.

30. Vernetzbare Heißschmelz-Zusammensetzung nach Anspruch 29, bei der dem Katalysator ein oder mehrere Cokatalysatoren beigefügt sind, die ausgewählt sind aus den folgenden Verbindungen:

- Alkylencarbonaten;

- Aldehyden;

- Oxazolinen;

- Carbodiimiden;

- organometallischen Verbindungen.

31. Vernetzbare Heißschmelz-Zusammensetzung nach Anspruch 29, bei der die Katalysatormenge wenigstens 0,05 Gew.-% beträgt.

32. Vernetzbare Heißschmelz-Zusammensetzung nach Anspruch 31, bei der die Katalysatormenge im Bereich von 0,5 bis zu 10 Gew.-% liegt.

33. Vernetzbare Heißschmelz-Zusammensetzung nach Anspruch 29, bei der der Katalysator vom kristallinen festen Typ ist.

34. Vernetzbare Heißschmelz-Zusammensetzung nach Anspruch 29, bei der der Katalysator entweder vom flüssigen oder vom festen Typ ist und der Reaktionsmischung in einer mikroverkapselten Form zugesetzt wird.

# EP 0 485 008 B1

**35.** Verfahren zum Verbinden von Substraten, das die Stufe des Aufbringens einer vernetzbaren Heißschmelz-Zusammensetzung nach Anspruch 1 auf ein zu verbindendes Substrat umfaßt.

**36.** Verfahren nach Anspruch 35, dadurch gekennzeichnet, daß die Bestandteile der genannten vernetzbaren Heißschmelz-Zusammensetzung mit Hilfe entweder eines statischen oder eines dynamischen Mischers vermischt werden, bevor sie aufgebracht werden.

**37.** Verfahren nach Anspruch 35, dadurch gekennzeichnet, daß die Komponenten der genannten vernetzbaren Heißschmelz-Zusammensetzung getrennt voneinander auf die zu bindenden Substrate aufgebracht werden und genau in dem Zeitpunkt in Kontakt gebracht werden, wenn man die genannten Substrate zusammenfügt.

**38.** Verfahren nach Anspruch 35, dadurch gekennzeichnet, daß es außerdem den Schritt einer Nachvernetzung bei Temperaturen von 100 bis 200°C umfaßt, wodurch Oxazolidon-Verknüpfungen erhalten werden.

**39.** Verfahren nach Anspruch 35, dadurch gekennzeichnet, daß man der genannten Zusammensetzung vor dem Aufbringen auf das zu verbindende Substrat Energie zuführt.

**40.** Verwendung einer Zusammensetzung nach Anspruch 1 als Heißschmelz-Klebstoff oder -Abdichtmittel.

## Revendications

**1.** Composition thermofusible réticulable comprenant :

(a) au moins un prépolymère avec une fonctionnalisation isocyanate, formé au moyen de la réaction entre un composé contenant des atomes d'hydrogènes actifs et un polyisocyanate, un tel prépolymère étant caractérisé par un rapport des groupes -NCO aux groupes contenant les hydrogènes actifs qui est inférieur à, ou égal à 5, et par un point de ramollissement compris dans la gamme de +30 à +200°C;
(b) au moins un polyépoxyde, contenu dans un rapport de 0,01 et 100 équivalents de polyépoxyde par équivalent de prépolymère avec une fonctionnalisation isocyanate;
(c) au moins un catalyseur qui catalyse la trimérisation des isocyanates et l'homopolymérisation des époxydes; et, éventuellement,
(d) des additifs et/ou des agents modifiants, à condition qu'aucun catalyseur d'alkylation ne soit présent, dans laquelle les composés contenant des hydrogènes actifs indiqués en (a) sont choisis parmi ceux ayant des poids moléculaires situés dans la gamme de 400 à 10000.

**2.** Composition thermofusible réticulable selon la revendication précédente, dans laquelle le composé contenant des hydrogènes actifs indiqué en (a) est choisi parmi les polycarbonate-polyols, polyester-polyols, polycaprolactone-polyols, polyéther-polyols, polybutylène-polyols, polyisoprène-polyols, polybutadiène-polyols, polybutadiène-acrylonitrile-polyols, polystyrène-butadiène-polyols, polyacrylate- polyols, sous la forme de composés uniques, ou sous forme de mélange entre eux.

**3.** Composition thermofusible réticulable selon la revendication précédente, dans laquelle les composés contenant des hydrogènes actifs sont choisis parmi ceux ayant des poids moléculaires compris dans la gamme de 100 à 10000.

**4.** Composition thermofusible réticulable selon la revendication 2, dans laquelle le composé contenant des hydrogènes actifs est de préférence constitué d'un mélange de deux ou plusieurs desdits polyols.

**5.** Composition thermofusible réticulable selon la revendication 2, dans laquelle le composé contenant des hydrogènes actifs est constitué d'un mélange de deux ou plusieurs polyols sous différentes formes physiques.

**6.** Composition thermofusible réticulable selon la revendication 2, dans laquelle le composé contenant des hydrogènes actifs est modifié avec des polyols ayant un poids moléculaire inférieur à 400.

**7.** Composition thermofusible réticulable selon la revendication 2, dans laquelle le composé contenant des hydrogènes actifs est modifié avec des diamines ayant un poids moléculaire inférieur à 2000.

8. Composition thermofusible réticulable selon la revendication 2, dans laquelle le composé contenant des hydrogènes actifs est modifié avec des polyaminoamides.

9. Composition thermofusible réticulable selon la revendication 1, dans laquelle le polyisocyanate spécifié en (a) est choisi parmi des composés bifonctionnels monomères, oligomères ou polymères à base aromatique, aliphatique ou cycloaliphatique, ou parmi les composés oligomères à base aromatique, aliphatique ou cycloaliphatique modifiés avec des groupes choisis parmi les uréthannes, isocyanurates, urées, biurets, uréthidinediones, uréthoneimines ou carbodiimides.

10. Composition thermofusible réticulable selon la revendication précédente, dans laquelle le diisocyanate est modifié avec un triisocyanate.

11. Composition thermofusible réticulable selon la revendication 9, dans laquelle le polyisocyanate est de préférence choisi parmi le diphénylméthanediisocyanate, l'isophorone-diisocyanate, l'hexaméthylène-diisocyanate, le dicyclohexylméthane-diisocyanate.

12. Composition thermofusible réticulable selon la revendication 1, dans laquelle le prépolymère avec une fonctionnalisation isocyanate est caractérisé par une teneur en groupes -NCO d'au moins 0,5% en poids.

13. Composition thermofusible réticulable selon la revendication 1, dans laquelle le prépolymère avec une fonctionnalisation isocyanate est partiellement modifié au moyen de l'introduction de segments oxazolidone.

14. Composition thermofusible réticulable selon la revendication 1, dans laquelle le prépolymère avec une fonctionnalisation isocyanate est partiellement modifié au moyen de l'introduction de polyols avec une fonctionnalité supérieure à 2.

15. Composition thermofusible réticulable selon la revendication 1, dans laquelle le prépolymère avec une fonctionnalisation isocyanate est caractérisé par la présence de groupes -NCO bloqués.

16. Composition thermofusible réticulable selon la revendication 15, dans laquelle le prépolymère avec une fonctionnalisation isocyanate est caractérisé par la présence de groupes -NCO de préférence bloqués par des agents de blocage ayant un point de fusion supérieur à 65°C.

17. Composition thermofusible réticulable selon la revendication 15, dans laquelle le prépolymère avec une fonctionnalisation isocyanate est caractérisé par la présence de groupes -NCO bloqués de manière interne.

18. Composition thermofusible réticulable selon la revendication 15, dans laquelle le prépolymère avec une fonctionnalisation isocyanate est caractérisé par la présence de groupes -NCO bloqués de manière interne contenant de l'uréthidinedione.

19. Composition thermofusible réticulable selon les revendications 1 à 18, dans laquelle le polyépoxyde est constitué d'un ou plusieurs types de composés aliphatiques, cycloaliphatiques, aromatiques ou hétérocycliques contenant au moins deux groupes époxy et ayant un poids moléculaire équivalent de 100 à 5000.

20. Composition thermofusible réticulable selon la revendication précédente, dans laquelle le rapport des équivalents des groupes époxydes aux équivalents des groupes isocyanate est situé dans la gamme de 0,1 à 25 équivalents de polyépoxyde par équivalent de prépolymère.

21. Composition thermofusible réticulable selon la revendication 19, dans laquelle le polyépoxyde est l'éther polyglycidylique d'une résine novolaque.

22. Composition thermofusible réticulable selon la revendication 19, dans laquelle le polyépoxyde est l'éther diglycidylique du bisphénol A (EDGBA).

23. Composition thermofusible réticulable selon la revendication 19, dans laquelle le polyépoxyde contient des segments élastomères et ne contient pas de groupe OH.

24. Composition thermofusible réticulable selon la revendication 23, dans laquelle le polyépoxyde est le produit de la réaction entre un prépolymère ayant des groupes -NCO terminaux et une résine époxy, et un tel polyépoxyde ne contient pas de groupe OH.

25. Composition thermofusible réticulable selon la revendication 23, dans laquelle le polyépoxyde est le produit de réaction d'un diisocyanate, d'un élastomère à groupe hydroxy et d'une résine époxy, et un tel polyépoxyde ne contient pas de groupe OH.

26. Composition thermofusible réticulable selon la revendication 23, dans laquelle le polyépoxyde contient des segments polysulfure et ne contient pas de groupe OH.

27. Composition thermofusible réticulable selon les revendications 19 à 20, dans laquelle le polyépoxyde contient des groupes OH.

28. Composition thermofusible réticulable selon les revendications 20 à 21, dans laquelle le polyépoxyde contient des segments élastomères.

29. Composition thermofusible réticulable selon les revendications 1 à 28, dans laquelle le catalyseur de trimérisation de l'isocyanate et de polymérisation de l'époxyde est constitué d'au moins un des composés suivants :

- amidines ou guanidines ou amines tertiaires linéaires ou cycliques, et leurs sels avec des composés donneurs de protons ou acides de Lewis;
- produits d'addition d'amines tertiaires et d'oxydes d'alkylène et leurs sels avec des donneurs de protons;
- sels d'ammonium quaternaire ou de phosphonium ou de boronium ou de sulfonium;
- xanthates ou carboxylates métalliques;
- halogénures organiques d'antimoine;
- indoles ou imidazoles substitués;
- bases minérales ou alkoxydes;
- phosphines;
- acides de Lewis;
- dérivés de l'aziridine.

30. Composition thermofusible réticulable selon la revendication 29, dans laquelle on ajoute au catalyseur un ou plusieurs co-catalyseurs, qui sont choisis parmi les composés suivants :

- carbonates d'alkylène
- aldéhydes
- oxazolines
- carbodiimides
- composés organométalliques.

31. Composition thermofusible réticulable selon la revendication 29, dans laquelle la quantité de catalyseur est d'au moins 0,05% en poids.

32. Composition thermofusible réticulable selon la revendication 31, dans laquelle la quantité de catalyseur est dans la gamme de 0,5% à 10% en poids.

33. Composition thermofusible réticulable selon la revendication 29, dans laquelle le catalyseur est de type solide cristallin.

34. Composition thermofusible réticulable selon la revendication 29, dans laquelle le catalyseur est de type liquide ou solide, et est ajouté au mélange réactionnel sous une forme microencapsulée.

35. Procédé pour lier des substrats comprenant l'étape consistant à appliquer à un substrat à lier une composition thermofusible réticulable selon la revendication 1.

36. Procédé selon la revendication 35, caractérisé en ce que l'on mélange les composants de ladite composition thermofusible réticulable au moyen d'un mélangeur statique ou dynamique, avant l'application.

**37.** Procédé selon la revendication 35, caractérisé en ce que l'on applique séparément aux substrats à lier les composants de ladite composition thermofusible réticulable et qu'on les met en contact au moment même où l'on assemble lesdits substrats.

**38.** Procédé selon la revendication 35, caractérisé en ce qu'il comprend de plus l'étape consistant à post-réticuler à des températures de 100 à 200°C, obtenant ainsi des liaisons oxazolidone.

**39.** Procédé selon la revendication 35, caractérisé en ce qu'on fournit de l'énergie à ladite composition avant l'application sur le substrat à lier.

**40.** Utilisation d'une composition selon la revendication 1 comme adhésif thermofusible ou matériau d'étanchéité.